# EUROPEAN PATENT SPECIFICATION

(11) **EP 4 173 884 B1**
(45) Date of publication and mention of the grant of the patent: **15.10.2025**
(21) Application number: 21828420.6
(22) Date of filing: 21.05.2021
(51) Int. Cl.: B60L 53/80, B60K 1/00, H01M 50/249, B66F 7/06, E06B 5/00, H01M 50/244, H01M 50/247, H01M 50/256, H01M 10/42, H01M 10/44, B60K 1/04

(54) **BATTERY SWAPPING PLATFORM, BATTERY SWAPPING STATION, AND BATTERY SWAPPING METHOD**
BATTERIEWECHSELPLATTFORM, BATTERIEWECHSELSTATION UND BATTERIEWECHSELVERFAHREN
PLATEFORME DE PERMUTATION DE BATTERIE, STATION DE PERMUTATION DE BATTERIE ET PROCÉDÉ DE PERMUTATION DE BATTERIE

(30) Priority: 24.06.2020 CN 202010589842
(43) Date of publication of application: 03.05.2023
(73) Proprietor: Nio Technology (Anhui) Co., Ltd, Hefei City, Anhui 230601 (CN)
(72) Inventor: LI, Yongjie, Shanghai 201804 (CN); ZHANG, Ning, Shanghai 201804 (CN); CAO, Jia, Shanghai 201804 (CN); ZHENG, Lang, Shanghai 201804 (CN); YANG, Chao, Shanghai 201804 (CN); XIA, Lijian, Shanghai 201804 (CN)
(74) Representative: Vossius & Partner Patentanwälte Rechtsanwälte mbB
(86) International application number: PCT/CN2021/095153
(87) International publication number: WO 2021/258942

(56) References cited:
- WO-A1-2019/100656
- WO-A1-2019/114546
- WO-A1-2019/165722
- CN-A- 101 890 942
- CN-A- 103 359 076
- CN-A- 103 359 076
- CN-A- 109 334 628
- CN-A- 109 334 628
- CN-A- 111 301 357
- CN-A- 111 645 563
- CN-B- 102 795 204
- CN-U- 208 344 191
- CN-U- 208 344 191
- CN-U- 212 921 204
- FR-A1- 2 946 305
- JP-A- 2003 143 714
- US-A- 5 612 606

## Description

### Technical Field

Embodiments of the disclosure relate to a vehicle battery swap technology, and in particular, to a battery swap platform, a battery swap station, and a battery swap method.

### Background Art

With the development of automobile technology, new energy vehicles have become the mainstream development trend of automobile industry. A battery swap station is an automated apparatus for swapping a battery for an electric vehicle. For example, published documents WO2019/100656A1, CN102795204B, and WO2019/165722A1, FR 2 946 305 Al and CN 208 344 191 U each disclose a battery swap platform and/or battery swap station for electric vehicles.

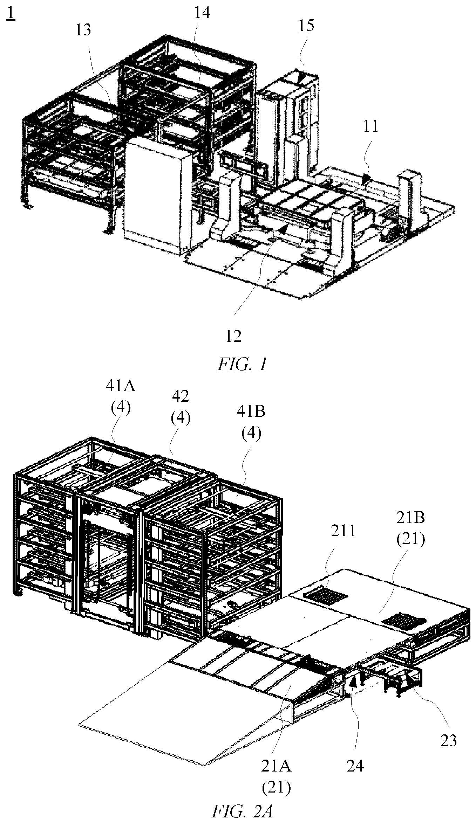

As shown in FIG. 1, an existing battery swap station 1 is mainly composed of a battery swap platform 11, a rail guided vehicle (RGV) 12, a hoister 13, battery compartments 14, and a charging cabinet 15.

The battery swap platform 11 is configured to park and position a vehicle, and the RGV 12 is configured to implement operations such as horizontal operation, lifting in height, and locking/unlocking of a battery. The hoister 13 and the battery compartments 14 are configured to store, transport and charge batteries, and the charging cabinet 15 is responsible for battery charging control and management.

At the beginning of battery swap, the vehicle entering and parked on the battery swap platform 11 first establishes a communication connection with the battery swap station 1 and performs other preparatory operations before battery swap. Then after the vehicle is positioned on the battery swap platform 11, the RGV 14 unlocks and dismounts a used battery from the vehicle, and transfers the used battery to the hoister 13, and then the hoister 13 stores the used battery in a vacant battery compartment 14 and takes out a fully charged battery from another battery compartment 14. The fully charged battery is first transferred to the RGV 12, the RGV 12 then travels to a designated position of the battery swap platform 11 and locks and mounts the fully charged battery on the vehicle on the battery swap platform 11, and finally an operation such as power-on self-detection is performed on the vehicle, to complete a battery swap operation for the vehicle.

In the prior art, two methods are usually adopted to solve a spatial contradiction between the storage of the used battery and the taking out of the fully charged battery. The first method is to reserve a vacant battery compartment 14 in a battery storage rack to store the used battery, and the second method is to provide a double-layer battery docking position on the hoister 13. However, the method of providing a special vacant battery compartment 14 in the battery storage rack inevitably reduces the number of effective compartment positions of the battery storage rack. Although the double-layer battery docking position provided in the hoister 13 occupies no compartment position of the battery storage rack, the double-layer docking position occupies the space in a height direction, resulting in that the number of layers of effective battery compartments of the battery storage rack is reduced under the condition of the same height, to meet the docking requirements for the double-layer docking position of the hoister.

In addition, battery transport of the battery swap station mainly includes two processes: bringing a used battery into a compartment and taking a fully charged battery out of a compartment. A current design structure of the battery swap station imposes such a limitation that the two transport processes must be completed in a serial manner, resulting in a relatively long time consumed for a vehicle battery swap operation.

### Summary of the Disclosure

In view of the foregoing problems, the invention provides a battery swap platform, a battery swap station, and a battery swap method, to overcome or at least partially solve the foregoing problems, as defined in the appended set of claims.

It can be seen from the foregoing technical solutions that in the battery swap platform and the battery swap station thereof provided in the embodiments of the disclosure, the battery temporary storage mechanism is arranged on the battery swap platform, and the arrangement position of the battery temporary storage mechanism avoids a normal transport path of the batter,so the battery swap platform can be provided in the disclosure to perform operations of transporting a used battery and a fully charged battery simultaneously, thereby improving battery transport efficiency, and shortening the total time taken for a vehicle battery swap operation.

### Brief Description of the Drawings

To illustrate the technical solutions in embodiments of the disclosure more clearly, a brief introduction to the drawings required for the embodiments or the prior art will be provided below. Obviously, the drawings in the following description are merely some of the embodiments of the disclosure, and those of ordinary skills in the art would also obtain other drawings according to these drawings.
FIG. 1 is a schematic diagram of an overall structure of an existing battery swap station;
FIG. 2A is a schematic diagram of an overall structure of a battery swap station according to the disclosure;
FIG. 2B is a schematic diagram of an overall structure of a battery swap platform according to the disclosure;
FIGS. 3A and 3B are schematic diagrams of arrangement positions of a battery temporary storage mechanism according to the disclosure;
FIG. 4 is a side view of an overall structure of a battery swap platform according to the disclosure;
FIG. 5 is a side view of an overall structure of a battery swap station according to the disclosure; and
FIG. 6 is a schematic flowchart of a battery swap method according to the disclosure.

Reference signs of elements:
1: Battery swap station (prior art);
11: Battery swap platform;
12: Rail guided vehicle (RGV);
13: Hoister;
14: Battery compartment;
15: Charging cabinet;
2: Battery swap platform;
21: Parking mechanism;
211: Wheel alignment device;
21A: First parking sub-mechanism;
21B: Second parking sub-mechanism;
22: Battery mounting/dismounting mechanism;
23: Battery temporary storage mechanism;
24: Accommodating mechanism;
241: Opening and closing device;
25: Battery conveying mechanism;
3: Battery swap station;
4: Battery storage mechanism;
41A, 41B: Battery storage rack;
410: Battery conveying passage;
411: Battery compartment;
42: Lifting device;
5: Battery docking mechanism.

### Detailed Description of Embodiments

To enable those skilled in the art to better understand the technical solutions in the embodiments of the disclosure, the technical solutions in the embodiments of the disclosure will be clearly and completely described below in conjunction with the accompanying drawings in the embodiments of the disclosure.

The specific implementation of the embodiments of the disclosure will be further described below with reference to the accompanying drawings in the embodiments of the disclosure.

### First embodiment

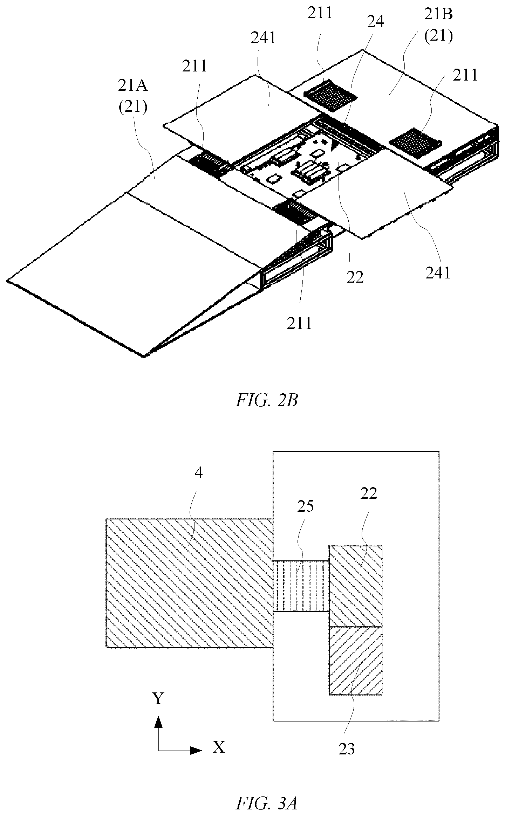

The first embodiment of the disclosure provides a battery swap platform. As shown in FIGS. 2A and 2B, the battery swap platform 2 in this embodiment mainly includes a parking mechanism 21, a battery mounting/dismounting mechanism 22, and a battery temporary storage mechanism 23.

The parking mechanism 21 is configured to park a vehicle.

Optionally, the parking mechanism 21 is provided with a wheel alignment device 211. In this embodiment, the wheel alignment device 211 is used to position wheels of the vehicle, such that the vehicle is stably parked on the parking mechanism 21.

The battery mounting/dismounting mechanism 22 is located below the vehicle parked on the parking mechanism 21.

In this embodiment, the battery mounting/dismounting mechanism 22 is mainly configured to perform a battery mounting/dismounting operation and a transport operation for the vehicle parked on the parking mechanism 21.

The battery temporary storage mechanism 23 is arranged on one side of the battery mounting/dismounting mechanism 22, and is configured to be docked with the battery mounting/dismounting mechanism 22, such that the battery is conveyed between the battery temporary storage mechanism 23 and the battery mounting/dismounting mechanism 22.

Specifically, the battery mounting/dismounting mechanism 22 can dismount a (used) battery from the vehicle parked on the parking mechanism 21 and deliver the dismounted (used) battery to the battery temporary storage mechanism 23 for temporary storage, or obtain a (fully charged) battery from the battery temporary storage mechanism 23 and mount the (fully charged) battery on the vehicle parked on the parking mechanism 21.

In an embodiment, the battery swap station 2 may be in an on-platform conveying mode. Specifically, the battery mounting/dismounting mechanism 22 may be arranged on the parking mechanism 21, and may ascend to a battery mounting/dismounting position relative to the parking mechanism 21 or descend to a battery transferring position relative to the parking mechanism 21.

In the battery mounting/dismounting position, the battery mounting/dismounting mechanism 22 may perform a battery mounting/dismounting operation for the vehicle parked on the parking mechanism 21.

In the battery transferring position, the battery mounting/dismounting mechanism 22 may allow the vehicle to enter or leave the parking mechanism 21. The battery mounting/dismounting mechanism 22 in the battery transferring position can be docked with the battery temporary storage mechanism 23, such that the battery is conveyed between the battery mounting/dismounting mechanism and the battery temporary storage mechanism 23. For example, the battery mounting/dismounting mechanism 22 may transport a used battery dismounted from the vehicle to the battery temporary storage mechanism 23 for temporary storage, or the battery mounting/dismounting mechanism 22 may obtain a fully charged battery from the battery temporary storage mechanism 23.

As shown in FIGS. 2A and 2B, in another embodiment, the battery swap station 2 may also be in an off-platform conveying mode. The battery swap station 2 is further provided with an accommodating mechanism 24 which is located below the vehicle parked on the parking mechanism 21.

Optionally, the parking mechanism 21 includes a first parking sub-mechanism 21A and a second parking sub-mechanism 21B that are arranged separately from each other. The accommodating mechanism 24 may be naturally formed by the first parking sub-mechanism 21A and the second parking sub-mechanism 21B that are arranged separately from each other.

Specifically, the battery mounting/dismounting mechanism 22 and the battery temporary storage mechanism 23 are respectively arranged in the accommodating mechanism 24. The battery mounting/dismounting mechanism 22 may ascend to a battery mounting/dismounting position relative to the accommodating mechanism 24 or descend to a battery transferring position relative to the accommodating mechanism 24.

In the battery mounting/dismounting position, the battery mounting/dismounting mechanism 22 may extend out of the accommodating mechanism 24 to perform a battery mounting/dismounting operation for the vehicle parked on the parking mechanism 21.

In an embodiment, the accommodating mechanism 24 may include an opening and closing device 241. In an open state, the opening and closing device 241 may allow the battery mounting/dismounting mechanism 22 to ascend to the battery mounting/dismounting position, to perform a battery mounting/dismounting operation for the vehicle parked on the parking mechanism 21.

In the battery transferring position, the battery mounting/dismounting mechanism 22 can be docked with the battery temporary storage mechanism 23, to convey the battery between the battery mounting/dismounting mechanism and the battery temporary storage mechanism 23.

For example, the battery mounting/dismounting mechanism 22 may transport a used battery dismounted from the vehicle to the battery temporary storage mechanism 23 for temporary storage, or the battery mounting/dismounting mechanism 22 may obtain a fully charged battery from the battery temporary storage mechanism 23.

In this embodiment, when the battery mounting/dismounting mechanism 22 is in the battery transferring position, the opening and closing device 241 can be switched to a closed state, and in this state, the vehicle can enter or leave the parking mechanism 21.

Optionally, the battery temporary storage mechanism 23 may be implemented in the form of a roller conveying line, a chain conveying line, a belt conveying line, or the like, but the disclosure is not limited thereto, and other transport forms may also be adopted, which will not be limited in the disclosure.

Furthermore, the battery swap platform 2 may further include a battery conveying mechanism 25. As shown in FIGS. 2A, 3A, 3B and 4, in an embodiment, the battery conveying mechanism 25 is arranged on the side of the battery mounting/dismounting mechanism 22 facing away from the battery temporary storage mechanism 23, and in the battery transferring position, the battery mounting/dismounting mechanism 22 can be docked with the battery temporary storage mechanism 23 and the battery docking mechanism 5, so as to convey the battery between the battery temporary storage mechanism 23 and the battery conveying mechanism 25 by means of the battery mounting/dismounting mechanism 22 in the battery transferring position.

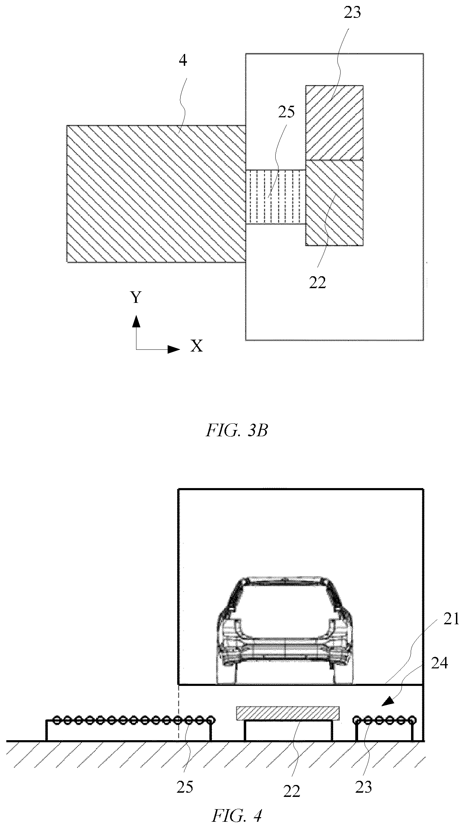

As shown in FIGS. 3A and 3B, in another embodiment, the battery conveying mechanism 25 may be arranged on one side of the battery mounting/dismounting mechanism 22 in a first axial direction (that is, an X-axis direction shown in FIGS. 3A and 3B), and the battery temporary storage mechanism 23 is arranged on one side or two opposite sides of the battery mounting/dismounting mechanism 22 in a second axial direction (that is, a Y-axis direction shown in FIGS. 3A and 3B) perpendicular to the first axial direction.

By means of the design mechanism of the foregoing battery conveying mechanism and the battery temporary storage mechanism, the arrangement position of the battery temporary storage mechanism 23 can avoid a battery transport path of the battery conveying mechanism, thereby implementing parallel conveying of a fully charged battery and a used battery.

It should also be noted that the arrangement position of the battery temporary storage mechanism 23 is not limited to that shown in FIGS. 3A and 3B, and in the case of meeting the requirements of spatial height, it is also possible to add temporary storage sites of the battery temporary storage mechanism 23 by using a superposed arrangement.

In this embodiment, one end of the battery conveying mechanism 25 is docked with the battery mounting/dismounting mechanism 22 in the accommodating mechanism 24, and the other end thereof may extend to the outside of the accommodating mechanism 24 from the inside of the accommodating mechanism 24, so as to convey a battery between the inside and the outside of the accommodating mechanism 24.

### Second embodiment

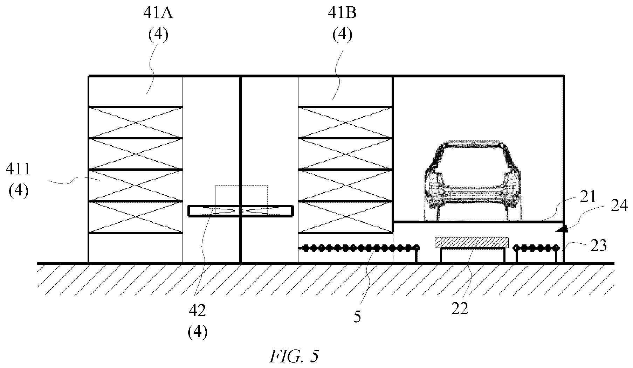

The second embodiment of the disclosure provides a battery swap station 3. As shown in FIGS. 2A and 5, the battery swap station 3 in this embodiment mainly includes the battery swap platform 2 according to the first aspect, a battery storage mechanism 4, and a battery docking mechanism 5.

In this embodiment, the battery swap platform 2 is mainly configured to mount or dismount a battery on or from a vehicle, the battery storage mechanism 4 is configured to store the battery, and the battery docking mechanism 5 connects the battery swap platform 2 to the battery storage mechanism 4 and is configured to convey the battery between the battery swap platform 2 and the battery storage mechanism 4.

In an embodiment, the battery docking mechanism 5 is arranged on the side of the battery mounting/dismounting mechanism 22 facing away from the battery temporary storage mechanism 23.

In another embodiment, the battery docking mechanism 5 is arranged on one side of the battery mounting/dismounting mechanism 22 in a first axial direction, and the battery temporary storage mechanism 23 is arranged on one side or two opposite sides (as shown in FIGS. 2A and 5) of the battery mounting/dismounting mechanism 22 in a second axial direction perpendicular to the first axial direction.

The battery mounting/dismounting mechanism 22 can be docked with the battery temporary storage mechanism 23 and the battery docking structure 5, so as to convey a battery between the battery temporary storage mechanism 23 and the battery docking structure 5 by means of the battery mounting/dismounting mechanism 22 (as shown in FIGS. 3A and 3B).

As shown in FIG. 5, the battery docking mechanism 5 in this embodiment may connect the battery mounting/dismounting mechanism 22 to the battery storage mechanism 4 by means of a side portion of the accommodating mechanism 24, so as to convey a battery between the battery storage mechanism 4 and the battery temporary storage mechanism 23 of the battery swap platform 2 by means of the battery mounting/dismounting mechanism 22.

In addition, the battery storage mechanism 4 in this embodiment includes two battery storage racks 41A, 41B and a lifting device 42 arranged between the battery storage racks 41A, 41B.

A battery conveying passage 410 is formed at the bottom of the battery storage rack 41B, such that the battery docking mechanism 5 is docked with the lifting device 42 by means of the battery conveying passage 410, and thus the battery can be conveyed between the battery docking mechanism 5 and the lifting device 42.

Optionally, each of the battery storage racks 41A, 41B includes a plurality of battery compartments 411 arranged in a stacked manner, and the lifting device 42 can be lifted or lowered in a vertical direction of the battery storage racks 41A, 41B so as to be docked with one of the plurality of battery compartments 411.

In another embodiment, a plurality of battery storage racks 41A, 42B may also be arranged side-by-side on a single side of the lifting device 42, and the lifting device 42 can move in a horizontal direction of the battery storage racks 41A, 41B so as to be docked with one of the plurality of battery storage racks 41A, 41B.

For example, a guide rail may be installed below the lifting device 42, so that the lifting device 42 can move along the guide rail between the plurality of battery storage racks 41A, 41B arranged side-by-side, thereby increasing the capacity of the battery compartment 411.

Furthermore, the battery docking mechanism 5 in this embodiment may be implemented by means of various structural designs. For example, the battery docking mechanism 5 may be a conveying mechanism such as a roller conveying line, a chain conveying line and a belt conveying line, but the disclosure is not limited thereto. The battery docking mechanism 5 may also be presented by means of a guide rail cooperating with a docking vehicle, but the disclosure is not limited thereto.

In another embodiment, the battery swap station 3 may further include charging devices (not shown) which are respectively arranged in the battery compartments 411 and are configured to be electrically connected to batteries stored in the battery compartments 411 for charging.

### Third embodiment

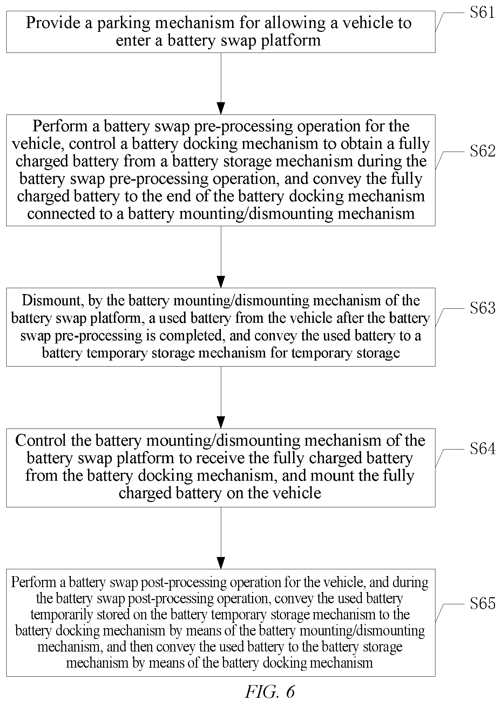

The third embodiment of the disclosure provides a battery swap method applied to the battery swap station according to the second aspect. As shown in FIG. 6, the battery swap method in this embodiment mainly includes the following steps.

In step S61, a parking mechanism is provided for allowing a vehicle to enter the battery swap platform.

In step S62, a battery swap pre-processing operation is performed for the vehicle, the battery docking mechanism is controlled to obtain a fully charged battery from the battery storage mechanism during the battery swap pre-processing operation, and the fully charged battery is conveyed to the end of the battery docking mechanism connected to the battery mounting/dismounting mechanism.

In this embodiment, the battery swap pre-processing operation includes, for example, controlling the vehicle to establish a communication connection with the battery swap station and other battery swap pre-preparation operations. During the battery swap pre-processing operation, the fully charged battery can be obtained from the battery storage mechanism and delivered to the battery swap platform.

In step S63, the battery mounting/dismounting mechanism of the battery swap platform dismounts a used battery from the vehicle after the battery swap pre-processing is completed, and the used battery is conveyed to the battery temporary storage mechanism for temporary storage.

Specifically, after the battery swap pre-processing is completed, the vehicle on the parking mechanism can be positioned (for example, by using a wheel alignment mechanism). After the vehicle positioning is completed, the battery mounting/dismounting mechanism is controlled to ascend from the battery transferring position to the battery mounting/dismounting position, so as to dismount the used battery from the vehicle on the parking mechanism, and the battery mounting/dismounting mechanism is then controlled to descend from the battery mounting/dismounting position to the battery transferring position, so as to be docked with the battery temporary storage mechanism located on the right side of the battery mounting/dismounting mechanism, such that the dismounted used battery is conveyed to the battery temporary storage mechanism for temporary storage.

In step S64, the battery mounting/dismounting mechanism of the battery swap platform is controlled to receive the fully charged battery from the battery docking mechanism, and mounts the fully charged battery on the vehicle.

Specifically, after descending to the battery transferring position, the battery mounting/dismounting mechanism is further docked with the battery docking mechanism on the left side thereof. Therefore, after the used battery is delivered to the battery temporary storage mechanism, the battery mounting/dismounting mechanism instantaneously receives the fully charged battery from the battery docking structure on the left side thereof, and ascends from the battery transferring position to the battery mounting/dismounting position again, so as to mount the fully charged battery on the vehicle.

In step S65, a battery swap post-processing operation is performed for the vehicle, and during the battery swap post-processing operation, the used battery temporarily stored on the battery temporary storage mechanism is conveyed to the battery docking mechanism by means of the battery mounting/dismounting mechanism, and then the used battery is conveyed to the battery storage mechanism by means of the battery docking mechanism.

Specifically, the battery swap post-processing operation includes, for example, a power-on self-detection operation on the vehicle, etc. During this process, the used battery may be conveyed from the battery temporary storage mechanism to the battery docking mechanism by means of the battery mounting/dismounting mechanism, and then delivered to a vacant battery compartment in the battery storage mechanism by means of the battery docking mechanism for storage and charging.

In summary, in the embodiments of the disclosure, the battery temporary storage mechanism is additionally provided on the battery swap platform to optimize a current transport operation, that is, an inflow operation of the fully charged battery can be synchronously performed during the vehicle battery swap pre-processing operation, and an outflow operation of the used battery is synchronously performed during the vehicle battery swap post-processing operation, thereby shortening a time interval between an operation of dismounting the used battery and an operation of mounting the fully charged battery, reducing the total time taken for the vehicle battery swap operation, and improving vehicle battery swap experience of a vehicle owner.

In addition, in the embodiments of the disclosure, through the additional provision of the battery temporary storage mechanism on the battery swap platform, a transport exchange point of the used battery and the fully charged battery can be transferred to the battery swap platform without occupying the original battery transport path, so that not only space utilization of the battery storage mechanism is maximized (that is, the number of layers of battery racks is maximized without changing an effective lifting height of a hoister), but also can a battery transfer operation inside the battery storage mechanism be simplified.

## Claims

1. A battery swap platform (2), comprising:
a parking mechanism (21) configured to park a vehicle;
a battery mounting/dismounting mechanism (22) located below the vehicle parked on the parking mechanism (21);
a battery docking mechanism (5) arranged on one side of the battery mounting/dismounting mechanism (22) and configured to connect the battery mounting/dismounting mechanism (22) to a battery storage mechanism (4); and
a battery temporary storage mechanism (23) arranged on another side of the battery mounting/dismounting mechanism (22) and configured to be docked with the battery mounting/dismounting mechanism (22),
wherein the battery mounting/dismounting mechanism (22) is configured to dismount a battery from the vehicle parked on the parking mechanism (21) and deliver the dismounted battery to the battery temporary storage mechanism (23) for temporary storage, or to obtain a battery from the battery temporary storage mechanism (23) and mount the battery on the vehicle parked on the parking mechanism (21); and
wherein the battery docking mechanism (5) is arranged on the side of the battery mounting/dismounting mechanism (22) facing away from the battery temporary storage mechanism (23), **characterized in that**
in the battery transferring position, the battery mounting/dismounting mechanism (22) is configured to be docked with the battery temporary storage mechanism (23) and the battery docking mechanism (5), so as to convey the battery from the battery docking mechanism (5) to the battery temporary storage mechanism (23) by means of the battery mounting/dismounting mechanism (22) in the battery transferring position.

2. The battery swap platform (2) according to claim 1, wherein the battery mounting/dismounting mechanism (22) is arranged on the parking mechanism (21), and is configured to ascend to a battery mounting/dismounting position relative to the parking mechanism (21) or descend to a battery transferring position relative to the parking mechanism (21), wherein in the battery mounting/dismounting position, the battery mounting/dismounting mechanism (22) is configured to perform a battery mounting/dismounting operation for the vehicle parked on the parking mechanism (21), and in the battery transferring position, the battery mounting/dismounting mechanism (22) is configured to be docked with the battery temporary storage mechanism (23) such that the battery is conveyed between the battery mounting/dismounting mechanism (22) and the battery temporary storage mechanism (23).

3. The battery swap platform (2) according to claim 1, wherein the battery swap platform (2) is further provided with an accommodating mechanism (24) located below the vehicle parked on the parking mechanism (21), wherein
the battery mounting/dismounting mechanism (22) and the battery temporary storage mechanism (23) are respectively arranged in the accommodating mechanism (24), and the battery mounting/dismounting mechanism (22) is configured to ascend to a battery mounting/dismounting position relative to the accommodating mechanism (24) or descend to a battery transferring position relative to the accommodating mechanism (24), wherein in the battery mounting/dismounting position, the battery mounting/dismounting mechanism (24) is configured to extend out of the accommodating mechanism (24) to perform a battery mounting/dismounting operation for the vehicle parked on the parking mechanism (21), and in the battery transferring position, the battery mounting/dismounting mechanism (22) is configured to be docked with the battery temporary storage mechanism (23) such that the battery is conveyed between the battery mounting/dismounting mechanism (22) and the battery temporary storage mechanism (23).

4. The battery swap platform (2) according to claim 2 or 3, wherein the battery temporary storage mechanism (23) comprises one of a roller conveying line, a chain conveying line, and a belt conveying line.

5. The battery swap platform (2) according to claim 3, wherein the parking mechanism (21) comprises a first parking sub-mechanism (21A) and a second parking sub-mechanism (21B), wherein the accommodating mechanism (24) is formed by the first parking sub-mechanism (21A) and the second parking sub-mechanism (21B) that are arranged separately from each other.

6. The battery swap platform (2) according to claim 1, wherein the battery docking mechanism (5) is arranged on one side of the battery mounting/dismounting mechanism (22) in a first axial direction, and the battery temporary storage mechanism (23) is arranged on one side or two opposite sides of the battery mounting/dismounting mechanism (22) in a second axial direction perpendicular to the first axial direction.

7. A battery swap station (3), comprising:
a battery swap platform (2) according to any one of claims 1 to 6 configured to mount or dismount a battery on or from a vehicle; and
a battery storage mechanism (4) configured to store the battery;
wherein the battery docking mechanism (5) is configured to connect the battery mounting/dismounting mechanism (22) of the battery swap platform (2) to the battery storage mechanism (4), so as to convey the battery between the battery storage mechanism (4) and the battery temporary storage mechanism (23) of the battery swap platform (2) by means of the battery mounting/dismounting mechanism (22).

8. A battery swap method applied to a battery swap station according to claim 7, the method comprising:
providing a parking mechanism for allowing a vehicle to enter the battery swap platform (S61);
performing a battery swap pre-processing operation for the vehicle, controlling the battery docking mechanism to obtain a fully charged battery from the battery storage mechanism during the battery swap pre-processing operation, and conveying the fully charged battery to the end of the battery docking mechanism connected to the battery mounting/dismounting mechanism (S62);
dismounting, by the battery mounting/dismounting mechanism of the battery swap platform, a used battery from the vehicle after the battery swap pre-processing is completed, and conveying the used battery to the battery temporary storage mechanism for temporary storage (S63);
controlling the battery mounting/dismounting mechanism of the battery swap platform to receive the fully charged battery from the battery docking mechanism, and mounting the fully charged battery on the vehicle (S64); and
performing a battery swap post-processing operation for the vehicle, and during the battery swap post-processing operation, conveying the used battery temporarily stored on the battery temporary storage mechanism to the battery docking mechanism by means of the battery mounting/dismounting mechanism, and then conveying the used battery to the battery storage mechanism by means of the battery docking mechanism (S65).

## Patentansprüche

1. Batteriewechselplattform (2), umfassend:
einen Parkmechanismus (21), der dazu ausgelegt ist, ein Fahrzeug zu parken;
einen Batteriemontage-/-demontagemechanismus (22), der sich unter dem auf dem Parkmechanismus (21) geparkten Fahrzeug befindet;
einen Batterieankopplungsmechanismus (5), der auf einer Seite des Batteriemontage-/-demontagemechanismus (22) angeordnet und dazu ausgelegt ist, den Batteriemontage-/-demontagemechanismus (22) mit einem Batterielagerungsmechanismus (4) zu verbinden; und
einen Batteriezwischenlagerungsmechanismus (23), der auf einer anderen Seite des Batteriemontage-/-demontagemechanismus (22) angeordnet und dazu ausgelegt ist, an den Batteriemontage-/-demontagemechanismus (22) angekoppelt zu sein,
wobei der Batteriemontage-/-demontagemechanismus (22) dazu ausgelegt ist, eine Batterie von dem auf dem Parkmechanismus (21) geparkten Fahrzeug zu demontieren und die demontierte Batterie zu dem Batteriezwischenlagerungsmechanismus (23) zur Zwischenlagerung zu liefern oder eine Batterie aus dem Batteriezwischenlagerungsmechanismus (23) zu beschaffen und die Batterie auf dem auf dem Parkmechanismus (21) geparkten Fahrzeug zu montieren; und
wobei der Batterieankopplungsmechanismus (5) auf der von dem Batteriezwischenlagerungsmechanismus (23) abgewandten Seite des Batteriemontage-/-demontagemechanismus (22) angeordnet ist, **dadurch gekennzeichnet, dass**
in der Batterieübergabeposition der Batteriemontage-/-demontagemechanismus (22) dazu ausgelegt ist, an den Batteriezwischenlagerungsmechanismus (23) und den Batterieankopplungsmechanismus (5) angekoppelt zu sein, um die Batterie mittels des Batteriemontage-/-demontagemechanismus (22) in der Batterieübergabeposition von dem Batterieankopplungsmechanismus (5) zu dem Batteriezwischenlagerungsmechanismus (23) zu befördern.

2. Batteriewechselplattform (2) nach Anspruch 1, wobei der Batteriemontage-/-demontagemechanismus (22) auf dem Parkmechanismus (21) angeordnet und dazu ausgelegt ist, zu einer Batteriemontage-/-demontageposition relativ zu dem Parkmechanismus (21) aufzusteigen oder sich zu einer Batterieübergabeposition relativ zu dem Parkmechanismus (21) abzusenken, wobei in der Batteriemontage-/-demontageposition der Batteriemontage-/-demontagemechanismus (22) dazu ausgelegt ist, einen Batteriemontage-/-demontagevorgang für das auf dem Parkmechanismus (21) geparkte Fahrzeug durchzuführen, und in der Batterieübergabeposition der Batteriemontage-/-demontagemechanismus (22) dazu ausgelegt ist, an den Batteriezwischenlagerungsmechanismus (23) angekoppelt zu sein, so dass die Batterie zwischen dem Batteriemontage-/-demontagemechanismus (22) und dem Batteriezwischenlagerungsmechanismus (23) befördert wird.

3. Batteriewechselplattform (2) nach Anspruch 1, wobei die Batteriewechselplattform (2) ferner mit einem Aufnahmemechanismus (24) versehen ist, der sich unter dem auf dem Parkmechanismus (21) geparkten Fahrzeug befindet, wobei
der Batteriemontage-/-demontagemechanismus (22) und der Batteriezwischenlagerungsmechanismus (23) jeweils in dem Aufnahmemechanismus (24) angeordnet sind und der Batteriemontage-/-demontagemechanismus (22) dazu ausgelegt ist, zu einer Batteriemontage-/-demontageposition relativ zu dem Aufnahmemechanismus (24) aufzusteigen oder sich zu einer Batterieübergabeposition relativ zu dem Aufnahmemechanismus (24) abzusenken, wobei in der Batteriemontage-/-demontageposition der Batteriemontage-/-demontagemechanismus (24) dazu ausgelegt ist, aus dem Aufnahmemechanismus (24) auszufahren, um einen Batteriemontage-/-demontagevorgang für das auf dem Parkmechanismus (21) geparkte Fahrzeug durchzuführen, und in der Batterieübergabeposition der Batteriemontage-/-demontagemechanismus (22) dazu ausgelegt ist, an den Batteriezwischenlagerungsmechanismus (23) angekoppelt zu sein, so dass die Batterie zwischen dem Batteriemontage-/-demontagemechanismus (22) und dem Batteriezwischenlagerungsmechanismus (23) befördert wird.

4. Batteriewechselplattform (2) nach Anspruch 2 oder 3, wobei der Batteriezwischenlagerungsmechanismus (23) eines einer Rollenförderlinie, einer Kettenförderlinie und einer Gurtförderlinie umfasst.

5. Batteriewechselplattform (2) nach Anspruch 3, wobei der Parkmechanismus (21) einen ersten Parkteilmechanismus (21A) und einen zweiten Parkteilmechanismus (21B) umfasst, wobei der Aufnahmemechanismus (24) durch den ersten Parkteilmechanismus (21A) und den zweiten Parkteilmechanismus (21B) gebildet ist, die getrennt voneinander angeordnet sind.

6. Batteriewechselplattform (2) nach Anspruch 1, wobei der Batterieankopplungsmechanismus (5) auf einer Seite des Batteriemontage-/-demontagemechanismus (22) in einer ersten axialen Richtung angeordnet ist und der Batteriezwischenlagerungsmechanismus (23) auf einer Seite oder zwei gegenüberliegenden Seiten des Batteriemontage-/-demontagemechanismus (22) in einer zweiten axialen Richtung senkrecht zur ersten axialen Richtung angeordnet ist.

7. Batteriewechselstation (3), umfassend:
eine Batteriewechselplattform (2) nach einem der Ansprüche 1 bis 6, die dazu ausgelegt ist, eine Batterie auf einem Fahrzeug zu montieren oder davon zu demontieren; und
einen Batterielagerungsmechanismus (4), der dazu ausgelegt ist, die Batterie zu lagern;
wobei der Batterieankopplungsmechanismus (5) dazu ausgelegt ist, den Batteriemontage-/-demontagemechanismus (22) der Batteriewechselplattform (2) mit dem Batterielagerungsmechanismus (4) zu verbinden, um die Batterie mittels des Batteriemontage-/-demontagemechanismus (22) zwischen dem Batterielagerungsmechanismus (4) und dem Batteriezwischenlagerungsmechanismus (23) der Batteriewechselplattform (2) zu befördern.

8. Batteriewechselverfahren, das auf eine Batteriewechselstation nach Anspruch 7 angewendet wird, wobei das Verfahren Folgendes umfasst:
Bereitstellen eines Parkmechanismus zum Ermöglichen eines Eintretens eines Fahrzeugs in die Batteriewechselplattform (S61);
Durchführen eines Batteriewechselvorverarbeitungsvorgangs für das Fahrzeug, Steuern des Batterieankopplungsmechanismus zum Beschaffen einer vollständig geladenen Batterie aus dem Batterielagerungsmechanismus während des Batteriewechselvorverarbeitungsvorgangs und Befördern der vollständig geladenen Batterie zu dem Ende des Batterieankopplungsmechanismus, das mit dem Batteriemontage-/-demontagemechanismus verbunden ist (S62);
Demontieren, durch den Batteriemontage-/-demontagemechanismus der Batteriewechselplattform, einer gebrauchten Batterie von dem Fahrzeug nach Abschluss des Batteriewechselvorverarbeitungsvorgangs und Befördern der gebrauchten Batterie zu dem Batteriezwischenlagerungsmechanismus zur Zwischenlagerung (S63);
Steuern des Batteriemontage-/-demontagemechanismus der Batteriewechselplattform, um die vollständig geladene Batterie aus dem Batterieankopplungsmechanismus aufzunehmen, und Montieren der vollständig geladenen Batterie auf dem Fahrzeug (S64); und
Durchführen eines Batteriewechselnachverarbeitungsvorgangs für das Fahrzeug und, während des Batteriewechselnachverarbeitungsvorgangs, Befördern der auf dem Batteriezwischenlagerungsmechanismus zwischengelagerten gebrauchten Batterie zu dem Batterieankopplungsmechanismus mittels des Batteriemontage-/-demontagemechanismus und dann Befördern der gebrauchten Batterie zu dem Batterielagerungsmechanismus mittels des Batterieankopplungsmechanismus (S65).

## Revendications

1. Plateforme d'échange de batterie (2), comprenant :
un mécanisme de mise en stationnement (21) conçu pour mettre un véhicule en stationnement ;
un mécanisme de pose/dépose de batterie (22) situé sous le véhicule en stationnement sur le mécanisme de mise en stationnement (21) ;
un mécanisme de raccordement pour transfert de batterie (5) placé sur un côté du mécanisme de pose/dépose de batterie (22) et conçu pour raccorder le mécanisme de pose/dépose de batterie (22) avec un mécanisme d'entreposage de batteries (4) ; et
un mécanisme d'entreposage temporaire de batterie (23) placé sur un autre côté du mécanisme de pose/dépose de batterie (22) et conçu pour être raccordé avec le mécanisme de pose/dépose de batterie (22),
le mécanisme de pose/dépose de batterie (22) étant conçu pour déposer une batterie du véhicule en stationnement sur le mécanisme de mise en stationnement (21) et transférer la batterie déposée au mécanisme d'entreposage temporaire de batterie (23) pour son entreposage temporaire, ou pour obtenir une batterie du mécanisme d'entreposage temporaire de batterie (23) et poser la batterie sur le véhicule en stationnement sur le mécanisme de mise en stationnement (21) ; et
le mécanisme de raccordement pour transfert de batterie (5) étant placé sur le côté du mécanisme de pose/dépose de batterie (22) à l'opposé du mécanisme d'entreposage temporaire de batterie (23), **caractérisée en ce que**
dans la position de transfert de batterie, le mécanisme de pose/dépose de batterie (22) est conçu pour être raccordé avec le mécanisme d'entreposage temporaire de batterie (23) et le mécanisme de raccordement pour transfert de batterie (5), afin de déplacer la batterie du mécanisme de raccordement pour transfert de batterie (5) au mécanisme d'entreposage temporaire de batterie (23) au moyen du mécanisme de pose/dépose de batterie (22) dans la position de transfert de batterie.

2. Plateforme d'échange de batterie (2) selon la revendication 1, dans laquelle le mécanisme de pose/dépose de batterie (22) est placé sur le mécanisme de mise en stationnement (21), et est conçu pour s'élever jusqu'à une position de pose/dépose de batterie relativement au mécanisme de mise en stationnement (21) ou pour s'abaisser jusqu'à une position de transfert de batterie relativement au mécanisme de mise en stationnement (21), dans laquelle, dans la position de pose/dépose de batterie, le mécanisme de pose/dépose de batterie (22) est conçu pour exécuter une opération de pose/dépose de batterie pour le véhicule en stationnement sur le mécanisme de mise en stationnement (21) et, dans la position de transfert de batterie, le mécanisme de pose/dépose de batterie (22) est conçu pour être raccordé avec le mécanisme d'entreposage temporaire de batterie (23) de telle sorte que la batterie soit déplacée entre le mécanisme de pose/dépose de batterie (22) et le mécanisme d'entreposage temporaire de batterie (23).

3. Plateforme d'échange de batterie (2) selon la revendication 1, la plateforme d'échange de batterie (2) étant, en outre, pourvue d'un mécanisme formant logement (24) situé sous le véhicule en stationnement sur le mécanisme de mise en stationnement (21), dans laquelle le mécanisme de pose/dépose de batterie (22) et le mécanisme d'entreposage temporaire de batterie (23) sont respectivement placés dans le mécanisme formant logement (24), et le mécanisme de pose/dépose de batterie (22) est conçu pour s'élever jusqu'à une position de pose/dépose de batterie relativement au mécanisme formant logement (24) ou s'abaisser jusqu'à une position de transfert de batterie relativement au mécanisme formant logement (24), dans laquelle, dans la position de pose/dépose de batterie, le mécanisme de pose/dépose de batterie (24) est conçu pour s'étendre hors du mécanisme formant logement (24) pour exécuter une opération de pose/dépose de batterie pour le véhicule en stationnement sur le mécanisme de mise en stationnement (21) et, dans la position de transfert de batterie, le mécanisme de pose/dépose de batterie (22) est conçu pour être raccordé avec le mécanisme d'entreposage temporaire de batterie (23) de telle sorte que la batterie soit déplacée entre le mécanisme de pose/dépose de batterie (22) et le mécanisme d'entreposage temporaire de batterie (23).

4. Plateforme d'échange de batterie (2) selon la revendication 2 ou 3, dans laquelle le mécanisme d'entreposage temporaire de batterie (23) comprend l'un d'un transporteur à rouleaux, d'un transporteur à chaîne et d'un transporteur à courroie.

5. Plateforme d'échange de batterie (2) selon la revendication 3, dans laquelle le mécanisme de mise en stationnement (21) comprend un premier mécanisme secondaire de mise en stationnement (21A) et un second mécanisme secondaire de mise en stationnement (21B), dans laquelle le mécanisme formant logement (24) est formé par le premier mécanisme secondaire de mise en stationnement (21A) et le second mécanisme secondaire de mise en stationnement (21B) qui sont disposés séparément l'un de l'autre.

6. Plateforme d'échange de batterie (2) selon la revendication 1, dans laquelle le mécanisme de raccordement pour transfert de batterie (5) est placé sur un côté du mécanisme de pose/dépose de batterie (22) dans une première direction axiale, et le mécanisme d'entreposage temporaire de batterie (23) est placé sur un côté ou deux côtés opposés du mécanisme de pose/dépose de batterie (22) dans une seconde direction axiale perpendiculaire à la première direction axiale.

7. Station d'échange de batterie (3), comprenant :
une plateforme d'échange de batterie (2) selon l'une quelconque des revendications 1 à 6 conçue pour la pose ou la dépose d'une batterie au niveau d'un véhicule ; et un mécanisme d'entreposage de batteries (4) conçu pour entreposer la batterie ;
dans laquelle le mécanisme de raccordement pour transfert de batterie (5) est conçu pour raccorder le mécanisme de pose/dépose de batterie (22) de la plateforme d'échange de batterie (2) au mécanisme d'entreposage de batteries (4), afin de déplacer la batterie entre le mécanisme d'entreposage de batteries (4) et le mécanisme d'entreposage temporaire de batterie (23) de la plateforme d'échange de batterie (2) au moyen du mécanisme de pose/dépose de batterie (22).

8. Procédé d'échange de batterie appliqué à une station d'échange de batterie selon la revendication 7, le procédé comprenant :
mettre en place un mécanisme de mise en stationnement servant à permettre à un véhicule de se placer sur la plateforme d'échange de batterie (S61) ;
exécuter une opération de prétraitement d'échange de batterie pour le véhicule, en commandant le mécanisme de raccordement pour transfert de batterie afin d'obtenir une batterie complètement chargée du mécanisme d'entreposage de batteries durant l'opération de prétraitement d'échange de batterie, et déplacer la batterie complètement chargée jusqu'au bout du mécanisme de raccordement pour transfert de batterie raccordé avec le mécanisme de pose/dépose de batterie (S62) ;
déposer, au moyen du mécanisme de pose/dépose de batterie de la plateforme d'échange de batterie, une batterie usagée à partir du véhicule une fois le prétraitement d'échange de batterie terminé, et déplacer la batterie usagée jusqu'au mécanisme d'entreposage temporaire de batterie pour son entreposage temporaire (S63) ;
commander le mécanisme de pose/dépose de batterie de la plateforme d'échange de batterie afin de recevoir la batterie complètement chargée du mécanisme de raccordement pour transfert de batterie, et poser la batterie complètement chargée sur le véhicule (S64) ; et
exécuter une opération de post-traitement d'échange de batterie pour le véhicule et, durant l'opération de post-traitement d'échange de batterie, déplacer la batterie usagée entreposée temporairement sur le mécanisme d'entreposage temporaire de batterie jusqu'au mécanisme de raccordement pour transfert de batterie au moyen du mécanisme de pose/dépose de batterie, puis déplacer la batterie usagée jusqu'au mécanisme d'entreposage de batteries au moyen du mécanisme de raccordement pour transfert de batterie (S65).
